# EUROPEAN PATENT APPLICATION

(11) **EP 3 715 935 A1**
(43) Date of publication of application: **30.09.2020**
(21) Application number: 20156833.4
(22) Date of filing: 16.12.2015
(51) Int. Cl.: G02B 27/00, F21V 8/00, G02B 27/14, G02B 27/01

(54) **SUBSTRATE-GUIDED OPTICAL DEVICE**

(30) Priority: 25.12.2014 IL 23649014
(62) Divisional of application: 15831162.1
(71) Applicant: Lumus Ltd., 7670502 Rehovot (IL)
(72) Inventor: AMITAI, Yaakov, 7622924 Rehovot (IL); OFIR, Yuval, 7313400 Kfar HaOranim (IL)
(74) Representative: Kancelaria Eupatent.pl Sp. z.o.o

(57) **Abstract**

An optical system includes a light-transmitting substrate having at least two external major surfaces and edges and an optical element for coupling light waves into the substrate, by total internal reflection. At least one partially reflecting surface is located in the substrate for coupling light waves out of the substrate, and at least one transparent layer, having a refractive index substantially lower than the refractive index of the light transmitting substrate is optically attached to at least one of the major surfaces of the substrate, defining an interface plane. The light waves coupled inside the substrate are substantially totally reflected from the interface plane between the major surface of the substrate and the transparent layer.

## Description

### Field of the Invention

The present invention relates to substrate-guided optical devices, and particularly to devices which include a plurality of reflecting surfaces carried by a common light-transmissive substrate, also referred to as a light-guide element.

### Background of the Invention

An important application for compact optical elements is in head-mounted displays (HMDs), wherein an optical module serves both as an imaging lens and a combiner, in which a two-dimensional image source is imaged to infinity and reflected into the eye of an observer. The display source can be obtained directly from either a spatial light modulator (SLM), such as a cathode ray tube (CRT), a liquid crystal display (LCD), an organic light emitting diode array (OLED), a scanning source or similar devices, or indirectly, by means of a relay lens or an optical fiber bundle. The display source comprises an array of elements (pixels) imaged to infinity by a collimating lens and transmitted into the eye of the viewer by means of a reflecting, or partially reflecting surface, acting as a combiner for non-see-through and see-through applications, respectively. Typically, a conventional, free-space optical module is used for these purposes. As the desired field-of-view (FOV) of the system increases, however, such a conventional optical module becomes larger, heavier and bulkier, and therefore, even for a moderate performance device, is impractical. This is a major drawback for all kinds of displays, and especially in head-mounted applications, wherein the system should necessarily be as light and compact as possible.

The strive for compactness has led to several different complex optical solutions, all of which, on the one hand, are still not sufficiently compact for most practical applications, and, on the other hand, suffer major drawbacks in terms of manufacturability. Furthermore, the eye-motion-box (EMB) of the optical viewing angles resulting from these designs is usually very small - typically less than 8 mm. Hence, the performance of the optical system is very sensitive even for small movements of the optical system relative to the eye of the viewer, and does not allow sufficient pupil motion for comfortable reading of text from such displays.

The teachings included in Publication Nos. WO01/95027, WO03/081320, WO2005/024485, WO2005/024491, WO2005/024969, WO2005/124427, WO2006/013565, WO2006/085309, WO2006/085310, WO2006/087709, WO2007/054928, WO2007/093983, WO2008/023367, WO2008/129539, WO2008/149339, WO2013/175465, IL 232197 and IL 235642, all in the name of Applicant, are herein incorporated by references.

### Disclosure of the Invention

The present invention facilitates the exploitation of very compact light-guide optical element (LOE) for, amongst other applications, HMDs. The invention allows relatively wide FOVs together with relatively large EMB values. The resulting optical system offers a large, high-quality image, which also accommodates large movements of the eye. The optical system offered by the present invention is particularly advantageous because it is substantially more compact than state-of-the-art implementations and yet it can readily be incorporated, even into optical systems having specialized configurations.

A broad object of the present invention is therefore to alleviate the drawbacks of prior art compact optical display devices and to provide other optical components and systems having improved performance, according to specific requirements.

The invention can be implemented to advantage in a large number of imaging applications, such as portable DVDs, cellular phones, mobile TV receivers, video games, portable media players, or any other mobile display devices.

The main physical principle of the LOE's operation is that light waves are trapped inside the substrate by total internal reflections from the external surfaces of the LOE. There are situations, however, wherein it is required to attach another optical element to at least one of the external surfaces. In such a case, it is essential to confirm that, on the one hand, the reflection of light waves from the external surfaces will not be degraded by this attachment and, on the other hand, that the coupling-out and the coupling-in optical arrangements of the light waves from and to the LOE, will not be disturbed. As a result, it is required to add at the external surfaces an angular sensitive reflective optical arrangement that, on the one hand, will substantially reflect the entire light waves which are coupled inside the LOE and impinge on the surfaces at oblique angles and, on the other hand, substantially transmit the light waves which impinge on the surfaces close to a normal incidence.

In previous inventions (e.g., WO 2005/024491) a reflective optical arrangement, wherein an angular sensitive thin film dielectric coating is applied to the surfaces of the LOE, has been illustrated. In the present invention, an alternative reflective optical arrangement utilizes dielectric transparent materials having an extremely low refractive index.

The invention therefore provides an optical system, including a light-transmitting substrate having at least two external major surfaces and edges, an optical element for coupling light waves into the substrate, by total internal reflection, at least one partially reflecting surface located in the substrate, for coupling light waves out of the substrate, and at least one transparent layer, having a refractive index substantially lower than the refractive index of the light transmitting substrate, optically attached to at least one of the major surfaces of the substrate, defining an interface plane, wherein the light waves coupled inside the substrate are substantially totally reflected from the interface plane between the major surface of the substrate and the transparent layer.

### Brief Description of the Drawings

The invention is described in connection with certain preferred embodiments, with reference to the following illustrative figures so that it may be more fully understood.

With specific reference to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention. The description taken with the drawings are to serve as direction to those skilled in the art as to how the several forms of the invention may be embodied in practice.

### In the drawings:

Fig. 1 is a side view of an exemplary, prior art, LOE;
Fig. 2 is a schematic diagram illustrating a prior art optical device for collimating input light waves from a display light source;
Fig. 3 is a schematic diagram illustrating a system for collimating and coupling-in input light waves from a display light source into n LOE, in accordance with the present invention;
Fig. 4 is a schematic diagram illustrating another embodiment for collimating and coupling-in input light waves from a display light source into a substrate, wherein the collimating module is attached to the substrate, in accordance with the present invention;
Fig. 5 illustrates an exemplary embodiment wherein a negative lens is attached to an external surface of the light-guide optical element, in accordance with the present invention;
Fig. 6 illustrates an exemplary embodiment wherein negative and positive lenses are attached to the external surfaces of the light-guide optical element, in accordance with the present invention;
Fig. 7 illustrates an exemplary embodiment wherein a negative lens is cemented to an external surface of the light-guide optical element utilizing low refractive index adhesive, in accordance with the present invention;
Fig. 8 illustrates an exemplary embodiment wherein a substrate fabricated of a low refractive index material is optically attached to an external surface of the light-guide optical element, in accordance with the present invention;
Fig. 9 illustrates an exemplary embodiment wherein negative and positive lenses are cemented to the external surfaces of the light-guide optical element utilizing two transparent layers, in accordance with the present invention;
Fig. 10 is a graph illustrating the reflectance curve for (a) an un-cemented LOE; (b) an LOE cemented to a low index material substrate and coated with an anti-reflection coating and (c) an LOE cemented to the low index material substrate and coated with an angular sensitive reflective coating, in accordance with the present invention;
Fig. 11 illustrates an exemplary embodiment of the present invention, wherein the coupling-in as well as the coupling-out elements are diffractive optical elements, and
Fig. 12 illustrates an exemplary embodiment of the present invention, wherein the optical module is embedded in a hand-carried display system.

### Detailed Description of Embodiments

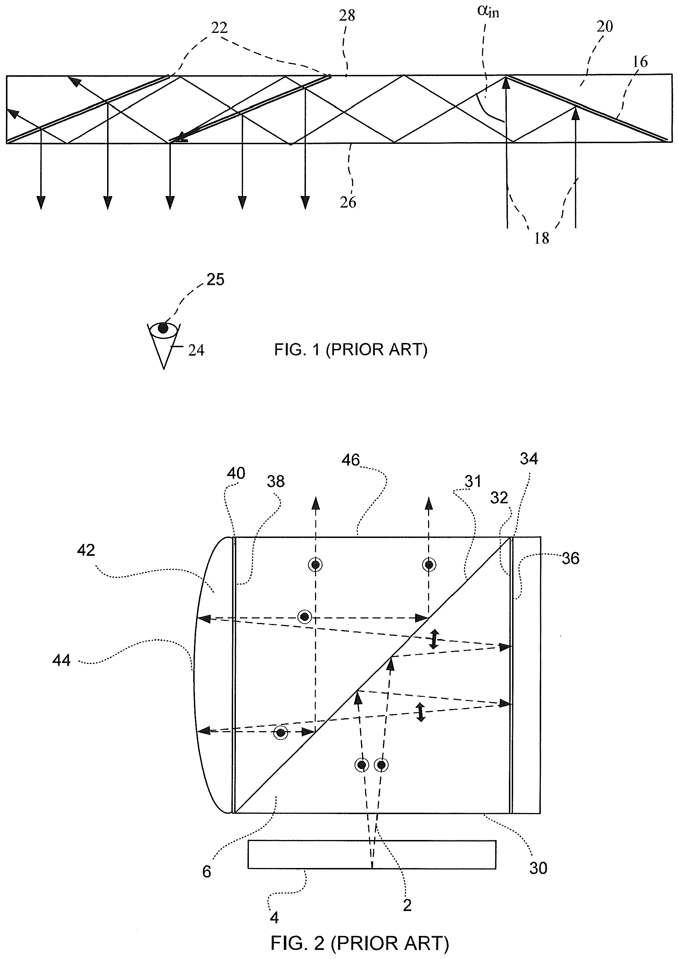

Fig. 1 illustrates a sectional view of a prior art substrate 20 and associated components (hereinafter also referred to as "an LOE"), utilizable in the present invention. An optical means, e.g., a reflecting surface 16, is illuminated by a collimated display light waves 18, emanating from a light source (not shown). The reflecting surface 16 reflects incident light waves from the source, such that the light waves are trapped inside a planar substrate 20 of the LOE, by total internal reflection. After several reflections off the major lower and upper surfaces 26, 28 of the substrate 20, the trapped light waves reach an array of selective reflecting surfaces 22, which couple the light waves out of the substrate into an eye 24, having a pupil 25, of a viewer. Herein, the input surface of the LOE will be regarded as the surface through which the input light waves enter the LOE and the output surface of the LOE will be regarded as the surface through which the trapped light waves exit the LOE. In the case of the LOE illustrated in Fig. 1, both the input and the output surfaces are on the lower surface 26. Other configurations, however, are envisioned in which the input and the image light waves could be located on opposite sides of the substrate 20, or when the light waves are coupled into the LOE through a slanted edge of the substrate.

As illustrated in Fig. 2, the s-polarized input light waves 2 from the display light source 4 are coupled into a collimating module 6, which is usually composed of a light waves transmitting material, through its lower surface 30. Following reflection off a polarizing beamsplitter 31, the light waves are coupled-out of the substrate through surface 32 of the collimating module 6. The light waves then pass through a quarter-wavelength retardation plate 34, are reflected by a reflecting optical element 36, e.g., a flat mirror, return to pass again through the retardation plate 34, and re-enter the collimating module 6 through surface 32. The now p-polarized light waves pass through the polarizing beamsplitter 31 and are coupled out of the light-guide through surface 38 of the collimating module 6. The light waves then pass through a second quarter-wavelength retardation plate 40, are collimated by a component 42, e.g., a lens, at its reflecting surface 44, return to pass again through the retardation plate 20, and re-enter the collimating module 6 through surface 38. The now s-polarized light waves are reflected off the polarizing beamsplitter 31 and exit the collimating module through the upper surface 46. The reflecting surfaces 36 and 44 can be materialized either by a metallic or a dielectric coating.

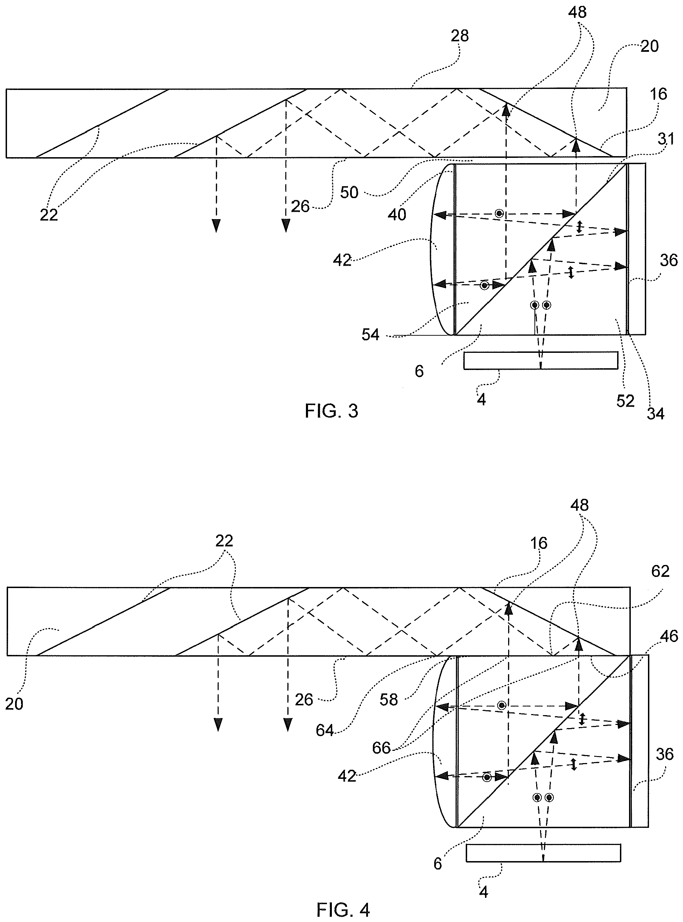

Fig. 3 illustrates how a collimating module 6, constituted by the components detailed with respect to Fig. 2, can be combined with an LOE, to form an optical system. The output light waves 48 from the collimating module 6 enter the substrate 20 through its lower surface 26. The incoming light waves (vis-à-vis the substrate 20) are reflected from the optical element 16 and trapped in the substrate, as illustrated in Fig. 2. Now, the collimating module 6, comprising the display light source 4, the folding prisms 52 and 54, the polarizing beamsplitter 31, the retardation plates 34 and 40 and the reflecting optical elements 36 and 42, can be integrated into a single mechanical module, which can be assembled independently of the substrate, with fairly relaxed mechanical tolerances. In addition, the retardation plates 34 and 40 and the reflecting optical elements 36 and 42 could be cemented together, respectively, to form single elements.

It would be advantageous to attach all the various components of the collimating module 6 to the substrate 20, to form a single compact element with a much simpler mechanical module. Fig. 4 illustrates such a module, wherein the upper surface 46 of the collimating module 6 is attached, at the interface plane 58, to the lower surface 26 of the LOE. The main problem of this configuration is that the attaching procedure cancels the previously existing air gap 50 (illustrated in Fig. 3) between the LOE and the collimating module 6. This air gap is essential for trapping the input light waves 48 inside the LOE 20. As illustrated in Fig. 4, the trapped light waves 48 should be reflected at points 62 and 64 on the interface plane 58. Therefore, a reflecting optical arrangement should be applied at this plane, either at the major surface 26 of the LOE or at the upper surface 46 of the collimating module 6. A simple reflecting coating cannot, however, be easily applied, since these surfaces should also be transparent to the light waves that enter and exit the LOE at the exemplary points 66. The light waves should pass through plane 64 at small incident angles, and reflect at higher incident angles. Usually, the passing incident angles are between 0° and 15°, and the reflecting incident angles are between 38° and 80°.

In all of the above-described embodiments of the present invention, the image which is coupled into the LOE is collimated to infinity. There are applications, however, wherein the transmitted image should be focused to a closer distance, for example, for people who suffer from myopia and cannot properly see images located at long distances.

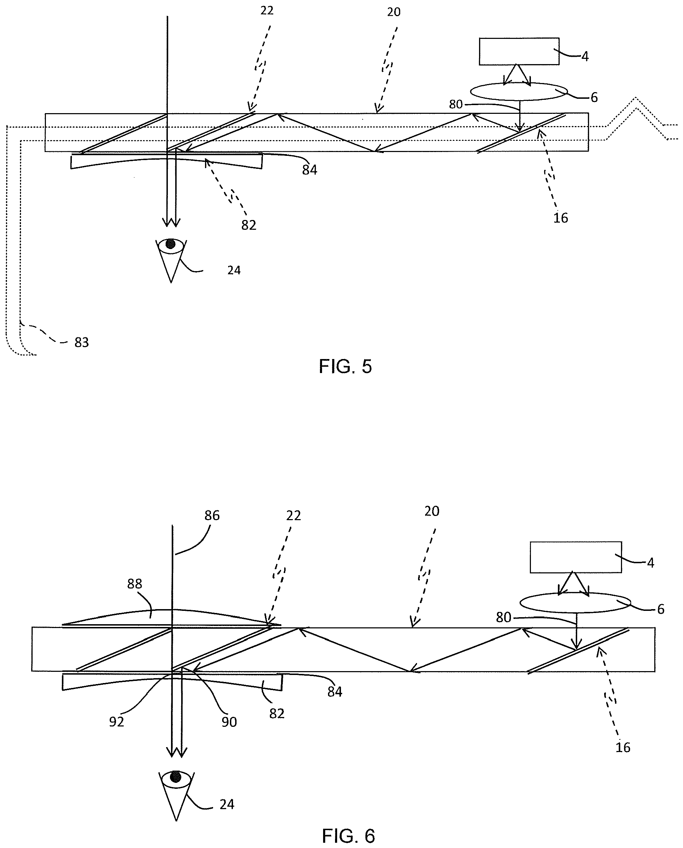

Fig. 5 illustrates a method for implementing a lens, based on the present invention. An image 80 from infinity is coupled into a substrate 20 by a reflecting surface 16 and then reflected by an array of partially reflecting surfaces 22 into the eye 24 of the viewer. The ophthalmic lens 82 focuses the images to a convenient distance and optionally corrects other aberrations of the viewer's eye, including astigmatism. The plano-concave lens 82 can be attached to the surface of the substrate at its flat surface 84. As explained above in relation to Fig. 4, a thin air gap must be preserved between the lens 82 and the substrate 20, to ensure the trapping of the image rays inside the substrate by total internal reflection.

In addition, in most of the applications related to the present invention, it is assumed that the external scene is located at infinity. There are, however, applications, such as for professional or medical purposes, where the external scene is located at closer distances.

Fig. 6 illustrates a method for implementing a dual lens configuration, based on the present invention. An image 80 from infinity is coupled into a substrate 20 by a reflecting surface 16 and then reflected by an array of partially reflecting surfaces 22 into the eye 24 of the viewer. Another scene image 86 from a close distance is collimated to infinity by a lens 88 and then passed through substrate 20 into the eye. The lens 82 focuses images 80 and 86 to a convenient distance, usually the original distance of the external scene 86, and corrects other aberrations of the viewer's eye, if required.

The lenses 82 and 88 illustrated in Figs. 5 and 6 are simple plano-concave and plano-convex lenses, respectively. To keep the planar shape of the LOE, however, it is possible to instead utilize Fresnel lenses, which can be made of thin molded plastic plates with fine steps. Moreover, an alternative way to materialize the lenses 82 or 88, instead of as fixed lenses as described above, is to exploit electronically controlled dynamic lenses. There are applications where it is required that the user will be able not only to see a non-collimated image, but also to control dynamically the focus of the image. It has been shown that a high resolution, spatial light modulator (SLM) can be used to form a dynamic element. The most popular sources for that purpose are LCD devices, but other dynamic SLM devices can be used, as well. High resolution, dynamic lenses having several hundred lines/mm are known. This kind of electro-optically controlled lenses can be used as the desired dynamic elements in the present invention, instead of the fixed lenses described above in conjunction with Figs. 5 and 6. Therefore, the operator can determine and set, in real time, the exact focal planes of both the virtual image projected by the LOE and the real image of the external view. Naturally, the lenses which are illustrated in Figs. 5 and 6 can easily be assembled inside an eyeglasses frame 83, as shown in Fig. 5.

As illustrated above in Fig. 6, it would be advantageous to attach all the lenses 82 and 88 to the LOE, to form a single compact element with a much simpler mechanical module. The main problem, as before, is that the attaching procedure cancels the previously existing air gap between the LOE and the lenses 82 and 88, which is essential for trapping the input light waves 80 inside the LOE. As further illustrated in Fig. 6, the trapped light ray 80 should be reflected at the point 90 of the interface plane 84 and transmitted through the same plane at point 92. Therefore, a similar reflecting optical arrangement, as described above in relation to Fig. 4, should be applied at this plane.

A possible approach for achieving the required reflecting optical arrangement is to optically attach a transparent layer, having a refractive index which is substantially lower than that of the LOE, to the major surfaces of the LOE. One method to materialize this approach is to cement the LOE to the required optical element utilizing a low refractive index adhesive. There are optical adhesives available in the market having a refractive index of -1.3.

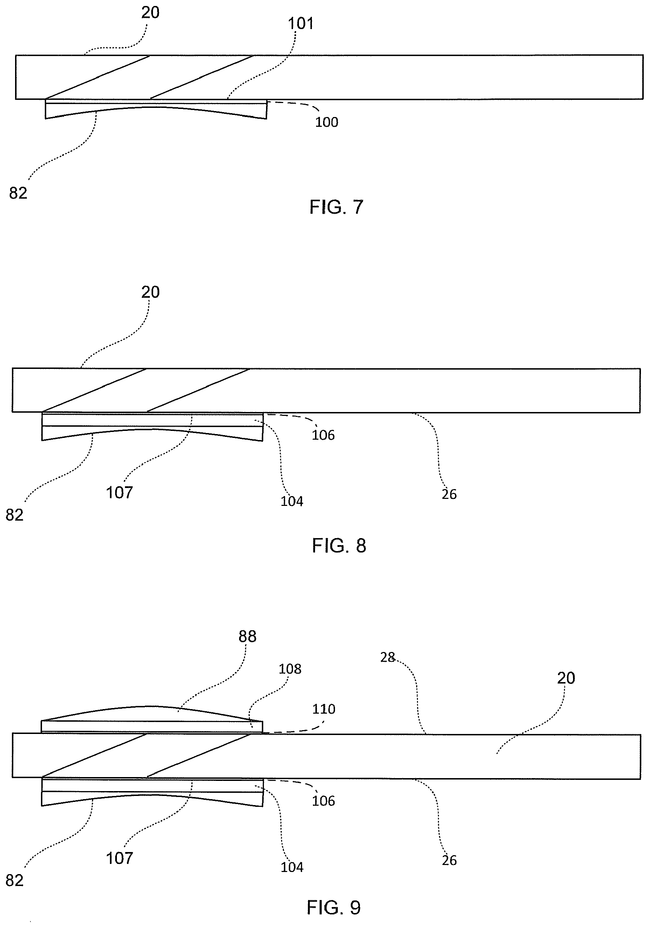

As illustrated in Fig. 7, the low refractive index 100 is utilized to cement the correcting lens 82 to the LOE. The light rays which are trapped inside the LOE are now totally reflected from the interface surface 101 between the adhesive 100 and the LOE. This cementing procedure cannot simply replace the required air gap. For example, in an LOE which is fabricated of BK7, having a refractive index of 1.52, the critical angle is 41.8°. Replacing the air gap with a low index adhesive will increase the critical angle to 58.8°. With such a high critical angle, only a very limited FOV can be trapped into the LOE by total internal reflection. By utilizing high refractive index materials for fabricating the LOE, however, the achievable FOV can be increased. Utilizing an optical material having a refractive index of 1.8 for fabricating the LOE, For example, will reduce the critical angle to 46.2°, which can now enable a more reasonable FOV.

An alternative embodiment for increasing the FOV is to insert an intermediate thin layer of a solid dielectric material having a low refractive index between the LOE and the attached optical element. A family of Aerogel materials having a very low refractive index (in the range of 1.1 - 1.2), as well as stabilized mechanical properties, has been developed. Another possible alternative for this purpose is a porous solid dielectric material fabricated by glancing angle deposition.

Fig. 8 illustrates a thin plate 104 of low index material (LIM) which is inserted between the LOE and the correcting lens 82. This plate 104 of LIM can either be deposited directly on the external surface 26 of the LOE or cemented to this surface utilizing a thin adhesive layer 106. To avoid multiple reflections from different surfaces it is preferred, in this case, to utilize an adhesive having a refractive index similar to that of the LOE. The internal reflections of the trapped rays inside the LOE will be from the upper surface 107 of the plate 104. Therefore, to avoid multiple images, this surface should be parallel to the external surface 26 of the LOE. As a result, and also to avoid black strips in the image, the thickness of the adhesive layer 106 should be minimized and, in any case, not more than a few microns. In addition, the optical quality and the flatness of surface 107 should be very high. Attaching a plate of L1M to the major surface of the substrate to achieve the required angular sensitive optical arrangement can be applied not only to one of the two external surfaces of the LOE but to the other surface, as well.

Fig. 9 illustrates a second thin plate 108 of LIM, which is inserted between the LOE 20 and the positive lens 88, wherein the lower surface 110 of the plate is optically attached to the upper surface 28 of the LOE.

Another procedure which can improve the performance of both embodiments described above, is to add an angular sensitive reflective coating (ASR) that trap the entire FOV inside the substrate, even for lower angles than the critical angle of the interface reflecting surface. Even for non-see-through applications, where one of the substrate surfaces can be opaque, and hence, can be coated with a conventional reflecting surface, the external surface, which is next to the eyes of the viewer, should be transparent, at least for the angles of the required external FOV. Therefore, the required reflecting coating should have very high reflectance for the region of angles lower than the critical angle, and very high reflectance for the entire FOV of the image.

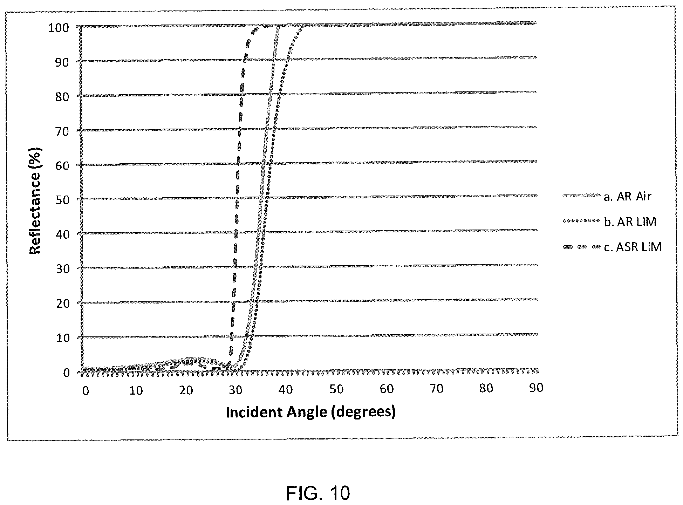

Fig. 10 illustrates the reflectance curves for an exemplary embodiment wherein the LOE is fabricated of an optical material having a refractive index of 1.6 and the wavelength λ=550 nm. Three different graphs are shown:
a) The solid line represents the reflectance curve of an un-cemented LOE, namely, an LOE wherein the external material is air and the external surfaces thereof are coated with a common anti-reflection (AR) coating. As illustrated, the critical angle is 38.7° and below that value the reflectance is drops rapidly.
b) The dotted line demonstrates the reflectance curve of an LOE which is cemented to a substrate of LIM having a refractive index of 1.1 and the interface surface is coated with a common AR coating. Here, the critical angle is increased to 43.4°. The potential FOV that can be coupled into the LOE is decreased but it is still reasonable and similar to un-cemented LOE fabricated of BK7 wherein the critical angle is 41.8°.
c) The dashed line represents the reflectance curve of an LOE, which is cemented to a substrate of LIM, having a refractive index of 1.1. Here, the interface surface, however, is coated with a special ASR coating. The optical arrangement of the reflection of the trapped rays inside the LOE from the interface surface, at incident angles lower than 43.4°, is no longer a total internal reflection, but rather a reflection from the ASR coating. The reflectance of the rays which impinge on the interface surface at incident angles higher than 34.7°, is higher than 99% and the rays are practically totally reflected from the interface surface. As a result, the potential FOV that can be trapped inside this LOE is considerably higher than that of an un-cemented LOE, which is illustrated in graph (a).

There are two significant regions in this graph: between 34° and 90°, where the reflectance is very high, and between 0° and 29° (equivalent to 0° - 46° outside the substrate) where the reflectance is very low. Hence, as long as one can ensure that the entire angular spectrum of the trapped optical waves, where very high reflections are desired, will be located inside the first region, while the entire angular spectrum of exterior FOV, where essentially zero reflections are required, will be located inside the second region, for a given FOV, the entire FOV will be trapped inside the substrate by internal reflections and that the viewer can see the whole image.

When an LIM substrate is cemented to the upper surface of the LOE the ASR coating can be applied to the external surface 107 (Fig. 9) of the LIM plate which is located adjacent to the LOE as explained above. If the LIM layer is, however, directly deposited on the LOE, the only way to apply the required ASR coating is on the external surface 26 of the LOE. Since the fabrication process of the LOE usually involves cementing optical elements, and since the required ASR coating is applied to the substrate surface only after the LOE body is complete, it is not possible to utilize the conventional hot-coating procedures that may damage the cemented areas. Novel thin-film technologies, such as ion-assisted coating procedures, can also be used for cold processing, eliminating the need to heat parts which allow cemented parts, such as LOEs, to be safely coated.

In all the embodiments illustrated so far, the element for coupling light waves out of the substrate is at least one flat partially reflecting surface located in said substrate, which is usually coated with a partially reflecting dielectric coating and is non-parallel to the major surfaces of said substrate. The special reflective optical arrangement according to the present invention can, however, be exploited also for other coupling-out technologies.

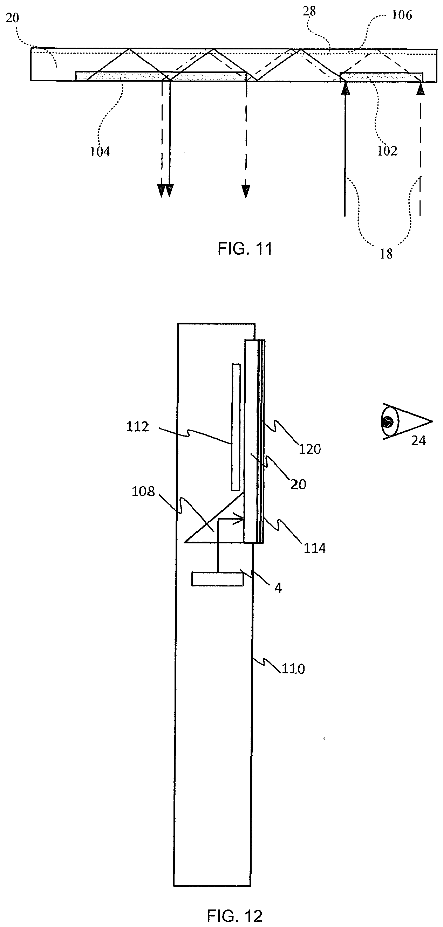

Fig. 11 illustrates a substrate 20, wherein the coupling-in element 102, or the coupling-out element 104, are diffractive elements and a thin L1M substrate is optically cemented to the upper surface 28 of the substrate. In addition, other coupling-out elements, such as a curved partially reflecting surface, and other means, can be used.

The elements of Figs. 5-9 are merely examples illustrating the simple implementation of the present invention inside an eyeglasses frame. Since the substrate-guided optical element, constituting the core of the system, is very compact and lightweight, it could be installed in a vast variety of arrangements. Many other embodiments are also possible, including a visor, a folding display, a monocle, and many others. This embodiment is designated for applications where the display should be near-to-eye; head-mounted, head-worn or head-carried. There are, however, applications where the display is located differently. An example of such an application is a hand-carried device for mobile application, such as, for example, a smartphone or smartwatch. The main problem of these smart devices is the contradiction between the required small size and volume and the desired high quality image.

Fig. 12 illustrates an alternative embodiment, based on the present invention, which eliminates the necessary compromise between the small size of mobile devices and the desire to view digital content on a full format display. This application is a hand-held display (HHD) which resolves the previously opposing requirements of achieving small mobile devices, and the desire to view digital content on a full format display, by projecting high quality images directly into the eye of the user. An optical module including the display source 4, the folding and collimating optics 108 and the substrate 20 is integrated into the body of a smart device 110, where the substrate 20 replaces the existing protective cover-window of the phone. Specifically, the volume of the support components, including source 4 and optics 108, is sufficiently small to fit inside the acceptable size for modern smart devices. In order to view the full screen transmitted by the device, the window of the device is positioned in front of the user's eye 24, observing the image with high FOV, a large eye-motion box and a comfortable eye-relief. It is also possible to view the entire FOV at a larger eye-relief by tilting the device to display different portions of the image. Furthermore, since the optical module can operate in see-through configuration, a dual operation of the device is possible, namely, there is an option to maintain the conventional display 112 intact. In this manner, the standard display can be viewed through the substrate 20, when the display source 4 is shut off. In a second, virtual mode, designated for massive internet surfing, or high quality video operations, the conventional display 112 is shut off, while the display source 4 projects the required wide FOV image into the eye of the viewer through the substrate 20. Usually, in most of the hand-carried smart devices, the user can operate the smart device by using a touchscreen which is embedded on the front window of the device. As illustrated in Fig. 12, the touchscreen 114 can be attached to a smart device by directly cementing it onto the external surface of a L1M layer 120, which is located on the substrate 20.

## Claims

1. An optical system, comprising:
a light-transmitting substrate having a plurality of surfaces including at least a first and a second major external surface, the substrate configured to guide coupled-in light waves indicative of an image between the major external surfaces of the substrate by internal reflection, and the substrate further configured to couple the light waves out of the substrate via at least one partially reflecting surface;
a lens arrangement external to the substrate including at least a first lens located next to one of the major external surfaces of the substrate, the first lens focusing at least one image, corresponding to at least one of light waves passed through the substrate, and the light waves guided between the major external surfaces of the substrate, to at least one distance for viewing by an eye of a viewer;
at least one transparent layer optically coupling at least a portion of the first lens to the one of the major external surfaces of the substrate to define an interface plane; and
an angular sensitive reflective coating applied to the interface plane,
wherein the at least one transparent layer has a refractive index lower than a refractive index of the light transmitting substrate so as to define a critical angle such that light waves coupled inside the substrate at angles greater than the critical angle are trapped within the substrate by total internal reflection from the interface plane between the major surface of the substrate and the transparent layer.

2. The optical system of claim 1, wherein the first lens is dynamically controlled.

3. The optical system of claim 1, wherein the first lens is electronically controlled.

4. The optical system of claim 1, wherein the first lens is electro-optically controlled.

5. The optical system of claim 1, wherein the at least one image focused by the first lens is the image corresponding to the light waves guided between the major external surfaces of the substrate.

6. The optical system of claim 1, wherein the at least one image focused by the first lens is an external scene image, different from the image, corresponding to light waves passed through the substrate.

7. The optical system of claim 1, wherein the at least one image focused by the first lens includes the image corresponding to the light waves guided between the major external surfaces of the substrate, and an external scene image, different from the image, corresponding to light waves passed through the substrate.

8. The optical system of claim 1, wherein the lens arrangement further includes a second lens located next to the other of the major external surfaces of the substrate for passing light waves from an external scene image, different from the image, through the substrate, and subsequently through the first lens, into the eye of the viewer.

9. The optical system of claim 8, further comprising a second transparent layer having a refractive index lower than the refractive index of the substrate, the second transparent layer optically coupling at least one portion of the second lens to the other of the major external surfaces of the substrate.

10. The optical system of claim 8, wherein the scene image and the external scene image are focused by the first lens to a user-controlled distance.

11. The optical system of claim 8, wherein the scene image is focused by the first lens to a predefined distance, wherein the predefined distance is the distance between the external scene image and the optical system.

12. The optical system of claim 8, wherein the second lens is a collimating lens.

13. The optical system of claim 8, wherein at least one of the first lens and the second lens is a dynamic lens.

14. The optical system of claim 13, wherein the dynamic lens is electronically controlled.

15. The optical system of claim 13, wherein the dynamic lens is electro-optically controlled.

16. The optical system of claim 8, wherein at least one of the first lens and the second lens is a Fresnel lens.

17. The optical system of claim 1, wherein the critical angle is defined such that light waves, corresponding to an entire field of view associated with the image, coupled inside the substrate at angles lower than the critical angle and angles greater than the critical angle, are trapped within the substrate by total internal reflection from the interface plane between the major external surface of the substrate and the transparent layer.

18. The optical system of claim 1, wherein the transparent layer is deployed between the first major external surface of the substrate and the first lens.

19. The optical system of claim 1, wherein the at least one partially reflecting surface for coupling light waves out of the substrate, is a diffractive element.

20. An optical system, comprising:
a light-transmitting substrate having a plurality of surfaces including at least a first and a second major external surface, the substrate configured to guide coupled-in light waves indicative of an image between the major external surfaces of the substrate by internal reflection, and the substrate further configured to couple the light waves out of the light-transmitting substrate via at least one partially reflecting surface;
at least one transparent layer having a refractive index lower than a refractive index of the substrate so as to define a critical angle, wherein the at least one transparent layer is optically attached to one of the major external surfaces of the substrate to define an interface plane;
an angular sensitive reflective coating applied to the interface plane, wherein the light waves, coupled inside the substrate at angles greater than the critical angle are trapped within the substrate by total internal reflection from the interface plane between the major external surface of the substrate and the transparent layer; and
a lens optically coupled to the at least one transparent layer, wherein the lens is located next to the first major external surface of the substrate and focuses at least one image, corresponding to at least one of light waves passed through the substrate, and the light waves guided between the major external surfaces of the light-transmitting substrate, to at least one distance, for viewing by an eye of a viewer, or wherein the lens is located next to the second major external surface of the substrate and passes light waves from an external scene image, different from the scene image, through the substrate, for viewing by the eye of the viewer.
